# EUROPÄISCHE PATENTSCHRIFT

(11) **EP 2 595 772 B1**
(45) Veröffentlichungstag und Bekanntmachung des Hinweises auf die Patenterteilung: **15.10.2014**
(21) Anmeldenummer: 11715692.7
(22) Anmeldetag: 14.04.2011
(51) Int. Cl.: B23B 41/12, B23B 29/034

(54) **STRUKTURIERTE GLEITFLÄCHE EINER LAGERSCHALE**
STRUCTURED SLIDING SURFACE OF A BEARING SHELL
SURFACE DE GLISSEMENT STRUCTURÉE D'UN COUSSINET

(30) Priorität: 21.07.2010 DE 102010031606
(43) Veröffentlichungstag der Anmeldung: 29.05.2013
(73) Patentinhaber: Federal-Mogul Wiesbaden GmbH, 65201 Wiesbaden (DE)
(72) Erfinder: RITTMANN, Stefan, 67292 Kirchheimbolanden (DE); ROßMANITH, Ralf, 65375 Oestrich-Winkel (DE); DOYLE, Steven, Blacksburg 24060 (US)
(74) Vertreter: HOFFMANN EITLE
(86) Internationale Anmeldenummer: PCT/EP2011/055910
(87) Internationale Veröffentlichungsnummer: WO 2012/010334

(56) Entgegenhaltungen:
- DE-A1- 4 418 605
- DE-A1- 19 925 193
- JP-U- H0 435 651
- US-A- 3 530 745

## Beschreibung

### Technisches Gebiet

Die vorliegende Erfindung betrifft eine Lagerschale mit strukturierter Gleitfläche, ein Werkzeug gemäß dem Oberbegriff des Anspruchs 1 zur Gleitflächenbearbeitung von Lagerschalen, mit zwei am Spindelkopf einer Bohrspindel angebrachten Schneidpatronen und ein Verfahren gemäß dem Oberbegriff des Anspruchs 10 zur Bearbeitung einer Lagerschale mit einer solchen Bohrspindel. Ein solches werkzeug und ein solches Verfahren sind aus der DE 199 25 193 A1 bekannt.

### Stand der Technik

Die Gleitflächenbearbeitung von Lagerschalen erfolgt heute durch ein sogenanntes Ausbohren der Lagerschalen. Hierbei dreht sich eine Bohrspindel mit einer Drehzahl X [U/min] und bewegt sich mit einem Vorschub Y [mm/U] in axialer Richtung. Das Ausbohren erfolgt mit einer Bohrspindel, in deren Spindelkopf zwei um 180° gegenüberliegende Schneidpatronen eingesetzt sind.

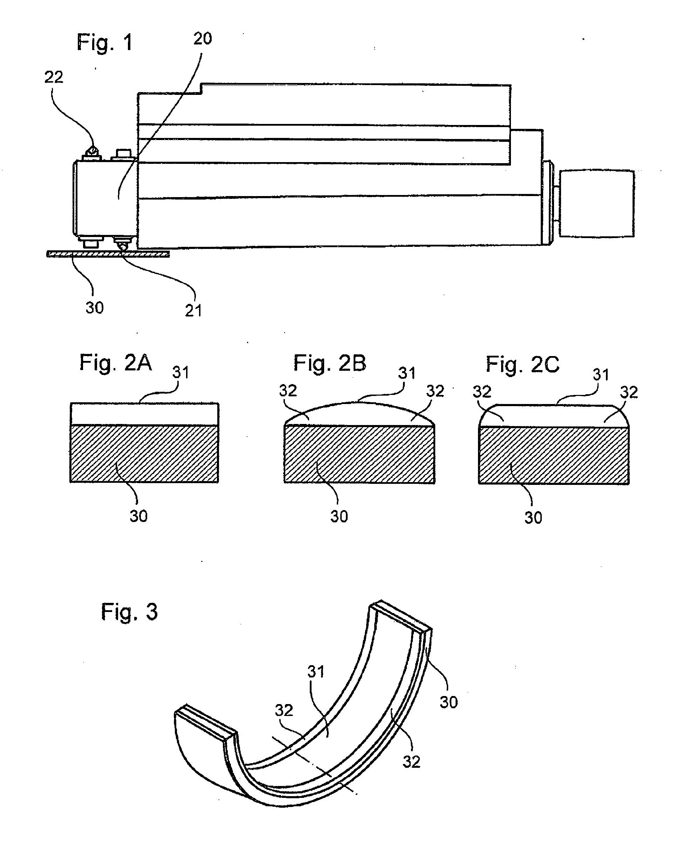

Eine Bohrspindel dieser Art ist in Fig. 1 gezeigt. Die Bohrspindel 20 weist eine erste Schneidpatrone 21 zum Schneiden der Lagerschale 30 auf eine gewisse Wanddicke und eine zweite Schneidpatrone 22 zum Ausbilden von sogenannten Freilegungsbereichen, die weiter unten erläutert werden, auf. Die Schneidpatronen 21 und 22 sind axial versetzt auf dem Spindelkopf angeordnet. Eine Einstellung des Durchmessers des Schneidkreises ist bei stillstehender Bohrspindel 20 möglich. Während des Bearbeitungsprozesses sind die beiden Schneidpatronen bezüglich ihrer axialen Richtung, d.h. in radialer Richtung der Bohrspindel 20, feststehend.

Fig. 2A zeigt den Querschnitt (entlang der in Fig. 3 dargestellten Strich-Punkt-Linie) einer Lagerschale 30. Die Gleitfläche 31 ist, wie es in Fig. 2A gezeigt ist, entlang der axialen Richtung der Lagerschale eben. Bei der Gleitflächenbearbeitung entsteht, abhängig vom Bearbeitungsvorschub in Verbindung mit der Bohrspindeldrehzahl, ein mehr oder weniger feiner aber sehr gleichmäßiger Rillenverlauf auf der Gleitfläche (in den Figuren nicht gezeigt). Die einzelnen Rillen verlaufen gleichmäßig und, den Krümmungsradius der Lagerschale ausgenommen, eben. Dieses Phänomen ist prozessbedingt und bei Verwendung eines Schneidwerkzeugs der oben beschriebenen Art unvermeidlich.

Unter einem Freilegungsbereich versteht man einen Bereich an den Lagerschalenenden, in dem die Wandstärke der Lagerschale im Vergleich zur Wandstärke der restlichen Lagerschale kontinuierlich reduziert ist. Auf diese Weise kann der Verschleiß einer in der Lagerschale laufenden Welle aufgrund von Ungenauigkeiten an den Verbindungsstellen der beiden ein Lager bildenden Lagerschalen verringert werden.

Eine weitere Ursache für Verschleiß am Lager und der darin gelagerten Welle liegt in einer minimalen Durchbiegung oder Verkantung unter Belastung der Welle. Handelt es sich bei dem Lager um ein Pleuelauge oder ein anderes stark beanspruchtes Lager in Verbrennungsmotoren, wirken sich diese ungleichmäßigen Belastungen der Welle auf das Lager letztendlich nachteilig auf das Laufverhalten des Motors aus.

Die DE 44 18 605 A1 beschreibt ein Verfahren und ein Werkzeug zur Herstellung von Bohrungen, wobei während einer Vorschubbewegung des Werkzeuges mit ersten Schneidparametern die generelle Erzeugung bzw. eine schleifende Grob-Vorbearbeitung der Bohrung durch eine am Vorderende des Werkzeuges vorgesehene erste Schneideinrichtung erfolgt und während einer Rückzugsbewegung des Werkzeuges mit zweiten, von den ersten Schneidparametern verschiedenen Schneidparametern eine schleifende Fein-Endbearbeitung der Bohrung durch eine am Umfang des Werkzeuges vorgesehene, radial verstellbare zweite Schneideinrichtung erfolgt.

Die DE 199 25 193 A1 beschreibt einen piezoelektrischen Einstellmechanismus zum Einstellen eines an einer Werkzeugwelle eines Werkzeugs einstellbar montierten Schneidelements. Der piezoelektrische Einstellmechanismus weist ein mit dem Schneidelement in Verbindung stehendes piezoelektrisches Verstellelement zum Verstellen des Schneidelements relativ zur Werkzeugwelle sowie einen Haltemechanismus zum Halten des Verstellelements in einem bestimmten Deformationszustand auf.

Ein Bohrgerät mit einem radial einstellbaren Schneidelement geht ist in der US 5,530,745 beschrieben.

Eine Lagerschale geht aus der JP H04 35651 U hervor.

### Kurze Beschreibung der Erfindung

Es ist eine Aufgabe der vorliegenden Erfindung, eine Lagerschale mit verbesserten Verschleißeigenschaften, ein Werkzeug und ein Verfahren zur Herstellung einer solchen Lagerschale bereitzustellen.

Die Aufgabe wird mit den Merkmalen der Ansprüche 1, 6 und 10 gelöst.

Das erfindungsgemäße Werkzeug weist eine vorzugsweise zylindrische Bohrspindel auf, die von einem Drehantrieb angetrieben wird und gleichzeitig eine Vorschubbewegung ausführt. Die Bohrspindel dreht sich um eine Drehachse und weist zumindest eine erste Schneidpatrone auf, die an der Bohrspindel am Außenumfang angebracht bzw. eingesetzt ist. Ein Schneidbereich der Schneidpatrone gerät bei der Bearbeitung einer Lagerschale mit der Gleitschicht der Lagerschale in Kontakt und schneidet die Lagerschale bei Drehung der Bohrspindel auf eine gewisse Wanddicke, wodurch auch gleichzeitig die eigentliche Gleitfläche erzeugt wird. Erfindungsgemäß ist die erste Schneidpatrone in ihrer axialen Richtung mittels eines Verstellmittels während des Betriebs des Werkzeugs verstellbar. Die Verstellrichtung unterscheidet sich von der Richtung der Drehachse, so dass die Verstellrichtung eine nicht verschwindende Komponente in der Richtung senkrecht zur Drehachse aufweist. Auf diese Weise lässt sich während der Ausbohrung der Lagerschale gezielt ein Profil in den Gleitbereich der Lagerschale einbringen. Erfährt die Lagerschale prozessbedingt eine oben beschriebene sehr gleichmäßige Profilierung, so wird diese von der gezielten Profilierung überlagert. Diese gezielte Strukturierung ist somit von einer gegebenenfalls zwangsläufig eingebrachten minimalen Rillenprofilierung zu unterscheiden und aufgrund der Gleichmäßigkeit der prozessbedingten Profilierung auch unterscheidbar. Durch die gezielte Profilierung wird der Schmierfilmaufbau zwischen der Gleitlagerschale und der darin gelagerten Welle verbessert, die Notlaufeigenschaften im Betrieb verbessert sowie eine Verringerung der Ölverluste in der Gleitlagerungsstelle im Betrieb erzielt. Diese Vorteile werden dadurch erzielt, dass minimale Durchbiegungen oder Verkantungen der Welle im Betrieb und unter Last durch eine den Betriebsbedingungen angepasste Gleitflächengeometrie kompensiert oder zumindest vermindert werden.

Zum effektiven Einbringen einer strukturierten Profilierung steht die Verstellrichtung vorzugsweise im Wesentlichen senkrecht auf der Drehachse.

Ferner weist die Bohrspindel zumindest eine zweite Schneidpatrone auf. Hierzu ist die erste Schneidpatrone in der Vorschubrichtung des Werkzeugs versetzt hinter der zweiten Schneidpatrone angeordnet. Vorzugsweise sind die beiden Schneidpatronen um 180° gegenüberliegend an der Bohrspindel angebracht. Durch eine geeignete Positionierung der zweiten Schneidpatrone und eine Schrägstellung des Bohrwerkzeugs bezüglich der Lagerschalenachse während der Bearbeitung lassen sich Freilegungsbereiche an den Lagerschalenenden ausbilden. Durch die Freilegungsbereiche wird vermieden, dass Ungenauigkeiten an den Verbindungsstellen der beiden Lagerschalen dazu führen, dass die Innenkante einer Teilfläche an einer Verbindungsstelle nach innen hervorsteht. Dadurch werden die Laufeigenschaften der Welle verbessert und eine Verschleißreduzierung des Lagers und der Welle bewirkt. Mit nur einem Werkzeug und nur einem Ausbohrungsarbeitsschritt lassen sich auf diese Weise zwei Maßnahmen zur Verschleißoptimierung und Verbesserung der Laufeigenschaften realisieren. Ein getrennter Bearbeitungsschritt zum Einbringen der gezielten Profilierung ist nicht notwendig. Darin liegt ein synergetischer Effekt der beiden Maßnahmen.

Vorzugsweise sind die Schneidpatronen in Verstellrichtung, die sich von der Richtung der Drehachse unterscheidet, mittels eines Verstellmittels verstellbar, während die Bohrspindel vom Drehantrieb gedreht wird. Selbstverständlich ist ebenso denkbar, dass lediglich eine der beiden ersten Schneidpatronen zum Ausbilden eines strukturierten Rillenprofils in einer Lagerschale in der Verstellrichtung verstellbar ist.

Vorzugsweise umfasst das Verstellmittel bzw. umfassen die Verstellmittel (im Falle mehrerer verstellbarer Schneidpatronen) ein Piezoelement. Die Verstellmöglichkeit wird somit kontinuierlich oder mit einer bestimmten Frequenz durch ein Piezoelement geschaffen, das sich vorzugsweise im Bohrspindelkopf befindet. Die Schneidpatrone ist konstruktiv derart im Spindelkopf angeordnet, dass sie vorzugsweise gegen das Piezoelement verspannt ist. Über eine entsprechende Ansteuerung des Piezoelements dehnt sich dieses aus und verändert somit die Position der Schneidpatrone in axialer Richtung. Aufgrund der kurzen Reaktionszeiten und der Präzision, mit der das Piezoelement arbeitet, ist hiermit eine für den Bearbeitungsprozess geeignete Verstellmöglichkeit der Schneidpatrone geschaffen.

Erfindungsgemäß ermöglicht das Werkzeug die Herstellung einer in axialer Richtung profilierten Lagerschale, deren Gleitfläche eine gezielte konvexe Profilierung aufweist.

Die gezielte Profilierung befindet sich vorzugsweise an den Randbereichen der Gleitfläche in axialer Richtung der Lagerschale. Zu unterscheiden von den Randbereichen in axialer Richtung sind die Lagerschalenenden, an denen zwei Lagerschalen zu einem Lager verbunden werden. Wie weit die Profilierung in axialer Richtung von den beiden Rändern in die Lagerschale hineinreicht lässt sich an die konkreten Erfordernisse und Belastungen anpassen. Selbstverständlich kann eine gezielte Profilierung auch in den Freilegungsbereichen vorgesehen sein.

Vorzugsweise ist die Gleitfläche an den Randbereichen in axialer Richtung gekrümmt und dazwischen eben, wobei die Gleitfläche an den Randbereichen konvex gekrümmt ist; d.h. die Gleitfläche, oder die Gleitfläche und der Freilegungsbereich, krümmt sich vom Mittelpunkt (Kreismittelpunkt) der Lagerschale weg. Alternativ ist die Gleitfläche der Lagerschale, und ggf. der Freilegungsbereich, in axialer Richtung über den gesamten Bereich gekrümmt, wobei der Krümmungsradius an den Randbereichen in axialer Richtung der Lagerschale am größten ist und die Krümmung der Gleitfläche konvex ist. In beiden Fällen wird eine minimale Durchbiegung oder Verkantung einer Welle, die unter Belastung in der Lagerschale läuft, bei einfacher Herstellung der gekrümmten Lauffläche zumindest teilweise kompensiert.

### Kurze Beschreibung der Zeichnungen

- Fig. 1: zeigt eine Bohrspindel mit zwei Schneidwerkzeugen, eines zur Bearbeitung von Freilegungsbereichen und eines zur Bearbeitung des Gleitbereichs einer Lagerschale.
- Fig. 2A: zeigt ein herkömmliches, ebenes Gleitflächenprofil.
- Fig. 2B: zeigt ein gekrümmtes Gleitflächenprofil.
- Fig. 2C: zeigt ein an den Randbereichen der Lagerschale gekrümmtes Gleitflächenprofil.
- Fig. 3: ist eine perspektivische Ansicht einer Lagerschale mit an Randbereichen gekrümmten Gleitflächenprofil.

### Weg zur Ausführung der Erfindung

Oben wurde mit Bezug auf Fig. 1 ein herkömmliches Werkzeug zur Gleitflächenbearbeitung von Lagerschalen beschrieben. In einer erfindungsgemäßen Ausführungsform ist die Schneidpatrone 21 gegen Piezoelemente (in Fig. 1 nicht gezeigt) verspannt. Über eine entsprechende Ansteuerung des Piezoelements bzw. der Piezoelemente (im Falle mehrere Schneidpatronen) dehnt sich dieses aus und ändert somit die axiale Position der Schneidpatrone, und zwar hauptsächlich in radialer Richtung bezüglich der Bohrspindel 20.

Bei Anwendung der verstellbaren Schneidpatrone lassen sich beispielsweise solche Profile der Lagerschale herstellen, wie sie in den Figuren 2B, 2C und 3 gezeigt sind. Durch die Krümmung insbesondere an den Randbereichen 32 werden die Auswirkungen einer Durchbiegung oder Verkantung einer in der Lagerschale unter Last laufenden Welle hinsichtlich des Verschleißes und der Laufeigenschaften abgemildert. Es sei darauf hingewiesen, dass die Krümmung in den Figuren 2B, 2C und 3 aus Gründen der Darstellung stark überzeichnet ist.

## Patentansprüche

1. Werkzeug zur Gleitflächenbearbeitung einer Lagerschale (30), mit einem Drehantrieb zum Antreiben einer um eine Drehachse drehbaren Bohrspindel (20) und zumindest einer ersten Schneidpatrone (21), die an der Bohrspindel (20) angebracht ist, um durch Drehung der Bohrspindel (20), die Lagerschale (30) auf eine gewisse Wanddicke zu schneiden, wobei
die erste Schneidpatrone (21) in einer Verstellrichtung, die eine Komponente in radialer Richtung der Bohrspindel (20) aufweist, mittels eines Verstellmittels verstellbar ist, während die Bohrspindel (20) vom Drehantrieb gedreht wird, **dadurch gekennzeichnet, dass**
die Bohrspindel (20) zumindest eine zweite Schneidpatrone (22) aufweist und die zweite Schneidpatrone (22) zum Ausbilden von Freilegungsbereichen vorgesehen ist und wobei die zweite Schneidpatrone (22) in Vorschubrichtung des Werkzeugs vor der ersten Schneidpatrone (21) liegt.

2. Werkzeug nach Anspruch 1, **dadurch gekennzeichnet, dass** die Verstellrichtung senkrecht auf der Achse der Bohrspindel (20) steht.

3. Werkzeug nach Anspruch 1, **dadurch gekennzeichnet, dass** die beiden Schneidpatronen (21, 22) um 180° gegenüberliegend an der Bohrspindel (20) angebracht sind.

4. Werkzeug nach einem der Ansprüche 1 bis 3, **dadurch gekennzeichnet, dass** beide Schneidpatronen in Verstellrichtungen, die jeweils eine Komponente in radialer Richtung der Bohrspindel (20) aufweisen, mittels eines Verstellmittels verstellbar sind, während die Bohrspindel (20) vom Drehantrieb gedreht wird.

5. Werkzeug nach einem der vorhergehenden Ansprüche, **dadurch gekennzeichnet, dass** das Verstellmittel ein Piezoelement umfasst.

6. Verfahren zur Bearbeitung einer Lagerschale (30) mit einem Werkzeug nach einem der Ansprüche 1 bis 5, wobei die erste Schneidpatrone die Lagerschale (30) durch Drehung der Bohrspindel (20) auf eine gewisse Wanddicke schneidet und
die erste Schneidpatrone während des Schneidvorgangs in der Verstellrichtung verstellt wird, um eine gezielte Profilierung auf der Gleitfläche (31) der Lagerschale (30) zu erzeugen,
**dadurch gekennzeichnet, dass**
mittels der zweiten Schneidpatrone Freilegungsbereiche ausgebildet werden.

7. Verfahren nach Anspruch 6, **dadurch gekennzeichnet, dass** die Verstellung der ersten Schneidpatrone periodisch erfolgt.

## Claims

1. Tool for machining sliding surfaces of a bearing shell (30), having a rotary drive for driving a drilling spindle (20) which can be rotated about an axis of rotation and at least one first cutting cartridge (21) which is attached to the drilling spindle (20) to cut the bearing shell (30) to a certain wall thickness by rotating the drilling spindle (20), wherein the first cutting cartridge (21) can be adjusted by means of an adjusting means in an adjusting direction which has one component in radial direction of the drilling spindle (20), while the drilling spindle (20) is rotated by the rotary drive, **characterised in that** the drilling spindle (20) has at least one second cutting cartridge (22) and the second cutting cartridge (22) is provided for forming exposed regions and wherein the second cutting cartridge (22) lies upstream of the first cutting cartridge (21) in the advance direction of the tool.

2. Tool according to claim 1, **characterised in that** the adjusting direction is perpendicular to the axis of the drilling spindle (20).

3. Tool according to claim 1, **characterised in that** the two cutting cartridges (21, 22) are attached to the drilling spindle (20) opposite one another at 180°.

4. Tool according to one of claims 1 to 3, **characterised in that** both cutting cartridges can be adjusted by means of an adjusting means in adjusting directions which in each case have one component in radial direction of the drilling spindle (20), while the drilling spindle (20) is rotated by the rotary drive.

5. Tool according to one of the preceding claims, **characterised in that** the adjusting means comprises a piezoelement.

6. Method for machining a bearing shell (30) using a tool according to one of claims 1 to 5, wherein the first cutting cartridge cuts the bearing shell (30) to a certain wall thickness by rotating the drilling spindle (20) and the first cutting cartridge is adjusted in the adjusting direction during the cutting process to generate specific profiling on the sliding surface (31) of the bearing shell (30), **characterised in that** exposed regions are formed by means of the second cutting cartridge.

7. Method according to claim 6, **characterised in that** the adjustment of the first cutting cartridge is effected periodically.

## Revendications

1. Outil pour l'usinage de surface de glissement d'un coussinet de palier (30), avec un entraînement en rotation pour entraîner une broche de perçage (20) pouvant tourner autour d'un axe de rotation et au moins un premier mandrin de coupe (21), qui est placé sur la broche de perçage (20), pour couper le coussinet de palier (30) à une certaine épaisseur de paroi par rotation de la broche de perçage (20),
le premier mandrin de coupe (21) pouvant être déplacé au moyen d'un moyen de déplacement dans une position de déplacement, qui présente une composante dans la direction radiale de la broche de perçage (20), pendant que la broche de perçage (20) est tournée par l'entraînement en rotation,
**caractérisé en ce que**
la broche de perçage (20) présente au moins un second mandrin de coupe (22) et le second mandrin de coupe (22) est prévu pour former des zones de dégagement, et le second mandrin de coupe (22) se trouvant dans la direction d'avancée de l'outil devant le premier mandrin de coupe (21).

2. Outil selon la revendication 1, **caractérisé en ce que** le dispositif de déplacement se trouve perpendiculairement à l'axe de la broche de perçage (20).

3. Outil selon la revendication 1, **caractérisé en ce que** les deux mandrins de coupe (21, 22) sont placés de manière opposée à 180° sur la broche de perçage (20).

4. Outil selon l'une des revendications 1 à 3, **caractérisé en ce que** les deux mandrins de coupe peuvent être déplacés au moyen d'un moyen de déplacement dans des directions de déplacement qui présentent respectivement une composante dans la direction radiale de la broche de perçage (20), pendant que la broche de perçage (20) est tournée par l'entraînement en rotation.

5. Outil selon l'une des revendications précédentes, **caractérisé en ce que** le moyen de déplacement comprend un élément piézo.

6. Procédé pour l'usinage d'un coussinet de palier (30) avec un outil selon l'une des revendications 1 à 5, le premier mandrin coupant le coussinet de palier (30) à une certaine épaisseur de paroi par rotation de la broche de perçage (20) et
le premier mandrin étant déplacé dans la direction de déplacement pendant l'opération de coupe, pour générer un profilage ciblé sur la surface de glissement (31) du coussinet de palier (30),
**caractérisé en ce que** des zones de dégagement sont formées au moyen du second mandrin de coupe.

7. Procédé selon la revendication 6, **caractérisé en ce que** le déplacement du premier mandrin de coupe a lieu de façon périodique.
